# EUROPÄISCHE PATENTANMELDUNG

(11) **EP 3 854 711 A1**
(43) Veröffentlichungstag der Anmeldung: **28.07.2021**
(21) Anmeldenummer: 20212337.8
(22) Anmeldetag: 08.12.2020
(51) Int. Cl.: B65C 9/14, F16B 2/10

(54) **PALETTE FÜR EIN PALETTENKARUSSELL UND ETIKETTIERMASCHINE FÜR BEHÄLTER**

(30) Priorität: 27.01.2020 DE 202020100408 U
(71) Anmelder: Krones AG, 93073 Neutraubling (DE)
(72) Erfinder: Fischer, Ina, 93073 Neutraubling (DE); Bielmeier, Heinrich, 93073 Neutraubling (DE)
(74) Vertreter: Grünecker Patent- und Rechtsanwälte PartG mbB

(57) **Zusammenfassung**

Palette (1) für ein Palettenkarussell (34) zum Etikettieren von Behältern (32), wobei die Palette (1) eine Buchse (5) zur Aufnahme einer die Palette tragenden Welle (6) und einen Klemmmechanismus zum Arretieren der Welle in der Buchse umfasst. Ferner umfasst die Buchse (5) wenigstens ein Querschnittssegment, das als eine zum Einsetzen der Welle (6) in die Buchse an einem Scharniergelenk (4) aufklappbare Klemmschelle (3) ausgebildet ist, und der Klemmmechanismus umfasst einen Spannverschluss (7) für die Klemmschelle, der die Welle mittels der zugeklappten Klemmschelle (3) gegen einen Grundkörper der Palette (1) drückt. Die Palette kann daher auf einfache Weise an einer Palettenwelle eines Palettenkarussells befestigt werden.

## Beschreibung

Die Erfindung betrifft eine Palette für ein Palettenkarussell gemäß dem Oberbegriff des Anspruchs 1 und eine damit ausgestattete Etikettiermaschine für Behälter.

Eine gattungsgemäße Palette ist beispielsweise aus DE 10 2017 209 164 A1 bekannt. Solche Paletten finden bekanntermaßen in Kaltleim-Etikettieraggregaten Verwendung. Die Paletten umfassen Buchsen, mit denen die Paletten auf drehbaren Palettenwellen drehfest montiert werden. Zu diesem Zweck können die Buchsen in Längsrichtung geschlitzt sein und Flansche aufweisen, um die Buchse daran durch Verschrauben um die Palettenwelle festzuziehen. Derartige Paletten können jedoch nur in Längsrichtung über die zugehörige Palettenwelle geschoben werden und werden daher meist vormontiert und somit gemeinsam mit der Palettenwelle in ein zugeordnetes Palettenkarussell eingesetzt. Ein Austausch der Paletten erfolgt dann in prinzipiell gleicher Weise.

Dies ist zum einen vergleichsweise umständlich und zum anderen bei bestimmten Aggregattypen mit fest montierter oberer Lagerplatte für die Palettenwellen nicht oder nur im Zuge umfangreicher Instandhaltungsmaßnahmen möglich. Dies trifft insbesondere für solche Etikettieraggregate zu, bei denen Leim auf die an den Paletten umlaufenden Etiketten aufgespritzt wird und diese dann direkt an zu etikettierende Behälter übergeben werden.

Es besteht daher Bedarf für Paletten, die sich an Palettenwellen eines Palettenkarussells möglichst einfach ohne Demontage von Lagerplatten und/oder Palettenwellen befestigen lassen.

Die gestellte Aufgabe wird mit einer Palette gemäß Anspruch 1 gelöst. Demnach eignet sich diese für ein Palettenkarussell zum Etikettieren von Behältern. Die Palette umfasst eine Buchse zur Aufnahme einer die Palette tragenden Welle und einen Klemmmechanismus zum Arretieren der Welle in der Buchse.

Erfindungsgemäß umfasst die Buchse wenigstens ein Querschnittssegment, das als eine zum Einsetzen der Welle in die Buchse an einem Scharniergelenk aufklappbare Klemmschelle ausgebildet ist, wobei der Klemmmechanismus einen Spannverschluss für die Klemmschelle umfasst, der die Welle mittels der zugeklappten Klemmschelle gegen einen Grundkörper der Palette drückt.

Unter einem Spannverschluss ist zu verstehen, dass dieser im geschlossenen Zustand eine Spannkraft erzeugt, die die Klemmschelle gegen die Welle und diese gegen den Grundkörper der Palette drückt, um deren relative Drehlage und Höhenlage mittels Formschluss und/oder Kraftschluss zwischen der Welle und dem Grundkörper festzulegen.

Die Palette lässt sich mit der Klemmschelle auf einfache Weise an der Welle montieren. Hierzu wird die Klemmschelle zuerst soweit aufgeklappt, dass die Welle quer zu ihrer Längsachse in die Buchse eingesetzt werden kann. Dann wird die Klemmschelle zugeklappt, so dass diese die Welle umgreift. Anschließend wird der Spannverschluss geschlossen und die Welle dadurch zwischen Klemmschelle und Grundkörper der Palette festgeklemmt, sodass deren Höhenlage und Drehlage bezüglich der Welle für den Arbeitsbetrieb zuverlässig festgelegt ist.

Der Spannverschluss ist dann insbesondere derart ausgebildet, dass er ohne Zuhilfenahme von Werkzeugen manuell geschlossen und geöffnet werden.

Vorzugsweise umfasst der Spannverschluss einen wergzeuglos zu betätigenden Spannhebel, der an der Klemmschelle mittels eines Zugbügels oder einer Zugstange angelenkt ist, sowie ein am Grundkörper der Palette ausgebildetes oder befestigtes Widerlager für den Spannhebel. Bei im/am Widerlager sitzenden Spannhebel wird der Spannverschluss insbesondere durch Überdrücken des Spannhebels über einen Totpunkt geschlossen. Nach Überdrücken des Totpunkts rastet der Spannhebel somit durch eine im Wesentlichen von selbst fortgesetzte Schließbewegung zuverlässig am Grundkörper der Palette ein.

Prinzipiell sind jedoch auch andere Spannverschlüsse denkbar, wie beispielsweise Exzenterspanner, Verschlussspanner mit gefedertem Zugbügel, elastische Spanngurte oder dergleichen.

Der Spannhebel und das am Grundkörper ausgebildete Widerlager für den Spannhebel ermöglichen eine besonders einfache und werkzeuglose Betätigung des Spannverschlusses.

Vorzugsweise ist die Klemmwirkung des Klemmmechanismus dann durch Längsverstellung des Zugbügels/ der Zugstange einstellbar. Darunter ist zu verstehen, dass die wirksame Länge des Zugbügels/ der Zugstange zwischen der jeweiligen Lagerung an der Klemmschelle und am Spannhebel einstellbar ist. Zu diesem Zweck kann die Zugstange beispielsweise als Gewindestange ausgebildet sein, die mit einer an der Klemmschelle oder am Spannhebel verankerten Mutter zusammenwirkt.

Somit lässt sich die Klemmwirkung an die im Arbeitsbetrieb zwischen der Welle und der Palette auftretenden Kräfte ebenso anpassen wie die erforderlichen Betätigungskräfte beim Öffnen und Schließen des Spannverschlusses.

Vorzugsweise ist im Grundkörper der Palette eine Vertiefung zur Aufnahme des Spannhebels ausgebildet, insbesondere derart, dass dieser im geschlossenen Zustand nicht über die Außenkontur des Grundkörpers übersteht. Dadurch lässt sich der Spannmechanismus gegen mechanische Beschädigung schützen und zudem vermeiden, dass der Spannmechanismus versehentlich geöffnet wird.

Vorzugsweise umfasst die Vertiefung ferner eine Griffmulde zum manuellen Hintergreifen des Spannhebels im geschlossenen Zustand. Dies erleichtert das manuelle/ werkzeuglose Öffnen des Spannmechanismus.

Vorzugsweise umfasst die Buchse einen nach innen, also zur Welle hin, vorstehenden und bezüglich des Grundkörpers unbeweglichen Zapfen zum Eingreifen der Palette in eine korrespondierende Vertiefung der Welle. Darunter ist zu verstehen, dass der Zapfen in die Vertiefung eingreift, um die Palette zumindest hinsichtlich ihrer Drehlage formschlüssig an der Welle festzulegen. Zusätzlich ermöglicht der Zapfen ein Eingreifen in die Welle derart, dass auch die Höhenlage der Palette bezüglich der Welle formschlüssig festgelegt wird.

Der Zapfen ist dann im Wesentlichen entgegengesetzt zu einem am Grundkörper der Palette ausgebildeten Aufnahmebereich / Ansaugbereich für Etiketten ausgerichtet, so dass der Zapfen bei aufgeklappter Klemmschelle im Wesentlichen in, bezogen auf die Welle, radialer Richtung in die Vertiefung eingeführt werden kann.

Somit ist eine vergleichsweise einfache und dennoch zuverlässige Festlegung der Palette an der Welle zumindest hinsichtlich ihrer Drehlage und gegebenenfalls bezüglich ihrer Höhenlage möglich.

Vorzugsweise ist im Grundkörper ein Vakuumkanal ausgebildet, der einen im Zapfen, insbesondere stirnseitig, ausgebildeten Vakuumanschluss mit einem am Grundkörper im Wesentlichen entgegengesetzt angeordneten Ansaugbereich für Etiketten verbindet. Somit kann das Festlegen der Drehlage und/oder Höhenlage an der Welle und das Herstellen des Vakuumanschlusses der Palette in einem Arbeitsgang erfolgen, nämlich durch Einführen des Zapfens in die korrespondierende Vertiefung der Welle.

Die gestellte Aufgabe wird ebenso gelöst mit einer Paletteneinheit für ein Palettenkarussell, wobei die Paletteneinheit die Palette gemäß wenigstens einer der voranstehend beschriebenen Ausführungsformen umfasst sowie eine damit korrespondierende Welle zur Lagerung der Palette am Palettenkarussell.

Vorzugsweise ist dann an der Welle wenigstens eine im Wesentlichen radial ausgerichtete Vertiefung für einen korrespondierenden und in der Buchse nach innen vorstehenden Zapfen ausgebildet, um die Palette hinsichtlich ihrer relativen Drehlage und Höhenlage an der Welle formschlüssig festzulegen.

Dies ist insbesondere im Gegensatz zu einer Nut-Feder-Kombination zu sehen, bei der die Nut in der Welle länger ist als die zugehörige Feder. Das heißt, die Palette kann bei eingeführtem Zapfen bezüglich der Welle nicht mehr nach oben oder unten verschoben werden.

Vorzugsweise ist die Vertiefung dann mehrfach und in Längsrichtung der Welle verteilt an der Welle vorhanden, um die Palette in unterschiedlichen Höhenlagen an der Welle/ am Palettenkarussell festlegen zu können. Die Vertiefungen sind dann im Sinne eines Höhenrasters verteilt, um die Palette in vorgegebenen Höhenlagen einsetzen zu können.

Durch ein Festlegen der relativen Drehlage der Palette an der Welle sowie ihrer relativen Höhenlage bezüglich der Welle können Paletten ohne aufwendige Einstellarbeiten korrekt und reproduzierbar an der Palettenwelle/ dem Palettenkarussell montiert werden.

Vorzugsweise umfasst die Welle einen längs darin verlaufenden Vakuumkanal sowie einen damit verbundenen und in die jeweilige Vertiefung mündenden Vakuumanschluss für die Palette. Somit lässt sich auf besonders einfache Weise eine korrekte mechanische Positionierung der Palette bezüglich der Welle und der nötige Vakuumanschluss über die Welle herstellen.

Die gelöste Aufgabe wird ebenso mit einem Palettenkarussell gelöst, das für eine Etikettiermaschine für Behälter geeignet ist und mehrere Paletteneinheiten gemäß wenigstens einer der voranstehend beschriebenen Ausführungsformen umfasst.

Die gestellte Aufgabe wird ebenso gelöst mit einer Etikettiermaschine zur Etikettierung von Behältern, die das Palettenkarussell umfasst sowie ein Leimwerk zum Aufspritzen von Leim auf am Palettenkarussell umlaufende Etiketten.

Bei derartigen Etikettiermaschinen ist es oft erforderlich, die Palettenwellen und/oder deren Lagerplatten fest am Palettenkarussell zu installieren, sodass eine seitliche Montage der Paletten mit der aufklappbaren Klemmschelle und dem zugehörigen Spannverschluss besonders vorteilhaft ist.

Eine bevorzugte Ausführungsform der Erfindung ist zeichnerisch dargestellt. Es zeigen:
- Figur 1: eine Schrägansicht der Palette;
- Figur 2: eine Schrägansicht der Palette und einer zugehörigen Welle im Längsschnitt;
- Figur 3A - 3E: einen horizontalen Längsschnitt durch die Palette mit verschiedenen Stellungen des Spannmechanismus; und
- Figur 4: eine schematische Draufsicht auf eine Etikettiermaschine mit Palettenkarussell und zugehörigen Paletten.

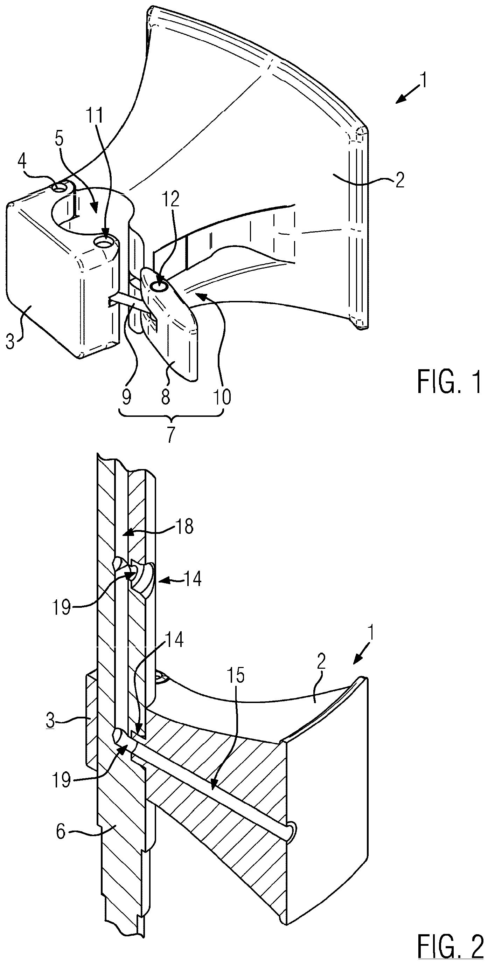

Wie die Figur 1 erkennen lässt, umfasst die Palette 1 gemäß einer bevorzugten Ausführungsform einen Grundkörper 2 und eine Klemmschelle 3, die mittels eines Scharniergelenks 4 am Grundkörper 2 aufklappbar befestigt ist. Der Grundkörper 2 und die Klemmschelle 3 bilden gemeinsam eine Buchse 5 für eine die Palette 1 tragende Welle 6 aus, die in der Figur 2 beispielhaft dargestellt ist.

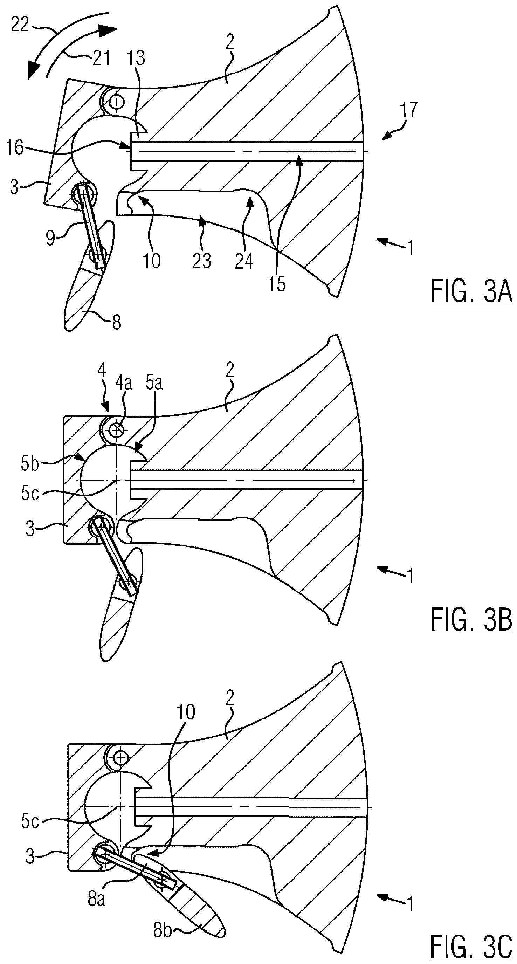

Wie beispielsweise die Figur 3B erkennen lässt, umfasst die Buchse 5 demnach ein vom Grundkörper 2 gebildetes starres Segment 5a und ein von der Klemmschelle 3 gebildetes aufklappbares Segment 5b. Die Klemmschelle 3 / das Segment 5b kann um eine zur Mittelachse 5c der Buchse 5 parallele Scharnierachse 4a soweit aufgeklappt werden, dass die Welle 6 orthogonal zur Mittelachse 5c in die Buchse 6 eingesetzt werden kann.

Eine (wie dargestellt) einteilige Klemmschelle 3 ermöglicht einen besonders einfachen Klemmmechanismus zum Festlegen der Welle 6 an der Palette 1. Prinzipiell könnte die Klemmschelle 3 aber auch zweiteilig sein und beidseitig durch je ein Scharniergelenk 4 mit zur Mittelachse 5c paralleler Schwenkachse 4a am Grundkörper 2 befestigt sein (nicht dargestellt). Die Buchse 5 würde dann entsprechend zwei aufklappbare Segmente umfassen.

Die Palette 1 umfasst ferner einen Spannmechanismus 7 für die Klemmschelle 3 mit einem Spannhebel 8, einer den Spannhebel 8 mit der Klemmschelle 3 verbindenden Zugstange 9 und einem am Grundkörper 2 ausgebildeten Widerlager 10 für den Spannhebel 8.

Der Spannmechanismus 7, die Klemmschelle 3 und der Grundkörper 2 bilden gemeinsam einen Klemmmechanismus zum Festlegen der Welle 6 in der Buchse 5.

Die Zugstange 9 ist mittels eines ersten Gelenks 11 an der Klemmschelle 3 und mittels eines zweiten Gelenks 12 am Spannhebel 8 befestigt. Der im Widerlager 10 sitzende Spannhebel 8 zieht die Klemmschelle 3 beim Schließen des Klemmmechanismus 7 mittels der Zugstange 9 zum Grundkörper 2 hin, wodurch die in die Buchse 5 eingesetzte Welle 6 zwischen der Klemmschelle 3 und dem Grundkörper 2 arretierend eingeklemmt wird.

Die Zugstange 9 kann beispielsweise als Gewindestange ausgebildet sein und wirkt dann mit einem im Bereich des zweiten Gelenks 12 ausgebildeten, korrespondierenden Innengewinde zusammen, beispielsweise mit einer Gewindemutter oder einem Bolzen mit Innengewinde. Durch Drehen der Gewindestange oder der Gewindemutter kann der Spannmechanismus 7 verstellt werden, um die Klemmkraft des Klemmmechanismus einzustellen.

Prinzipiell könnte die Zugstange 9 aber auch durch einen gegebenenfalls ebenso längenverstellbaren Zugbügel (nicht dargestellt) oder dergleichen ersetzt werden.

Wie beispielsweise die Figur 3A gut erkennen lässt, ist am Grundkörper 2 im Bereich der Buchse 5 ein in diese vorstehender Zapfen 13 ausgebildet, der mit wenigstens einer an der Welle 6 ausgebildeten Vertiefung 14 formschlüssig korrespondiert, siehe die Figur 2.

In der Figur 2 sind beispielhaft zwei identische Vertiefungen 14 dargestellt, die in Längsrichtung der Welle 6, und somit im eingebauten Zustand in unterschiedlichen Höhenlagen, zueinander versetzt angeordnet sind. Der Zapfen 13 lässt sich dann wahlweise in eine der Vertiefungen 14 einführen, um die Palette 1 bezüglich der Welle 6 jeweils hinsichtlich ihrer Drehlage und ihrer Höhenlage formschlüssig festzulegen.

Im Grundkörper 2 der Palette 1 ist ein erster Vakuumkanal 15 ausgebildet, der einen vorzugsweise an der Stirnfläche des Zapfens 13 ausgebildeten Vakuumanschluss 16 der Palette 1 mit einem bezüglich des Grundkörpers 2 entgegengesetzten Ansaugbereich 17 für Etiketten verbindet her.

In der Welle 6 ist ein längs verlaufender zweiter Vakuumkanal 18 ausgebildet, der vorzugsweise über je einen Stichkanal in einen in jeder Vertiefung 14 ausgebildeten Vakuumanschluss 19 mündet. Die Vakuumanschlüsse 16, 19 wirken im Sinne von Stecker und Buchse zusammen.

Über die Verbindung der Palette 1 mit der Welle 6 mittels des Zapfens 13, der Vertiefung 14 und die gasdichte Steckverbindung mittels der Vakuumanschlüsse 16, 19 kann die Palette 1 auf einfache Weise in einer stabilen und reproduzierbaren Lage an der Welle 6 festgelegt werden und über diese mit Vakuum versorgt werden.

Die Figur 3A zeigt die Palette 1 mit einem unvollständig geöffneten Spannmechanismus 7, die Figuren 3B bis 3E Stellungen beim manuellen Schließen des Spannmechanismus 7.

In der Figur 3A ist das Aufklappen 21 und das Zuklappen 22 der Klemmschelle 3 zum besseren Verständnis mit Pfeilen schematisch angedeutet. Gut zu erkennen ist dort außerdem der in die Buchse 5 hineinragende Zapfen 13 und der Vakuumkanal 15 mit dem stirnseitig am Zapfen 13 mündenden Vakuumanschluss 16.

Ferner ist in den Figuren 3A bis 3E zu erkennen, dass für die Aufnahme des Spannhebels 8 am Grundkörper 2 in diesem eine Vertiefung 23 ausgebildet ist, die vorzugsweise ferner eine Griffmulde 24 zum Hintergreifen des vollständig angedrückten Spannhebels 8 umfasst. In den Figuren 3B bis 3E ist zudem die Mittelachse 5c der Buchse 5 angedeutet, die bei eingesetzter Welle 6 im Wesentlichen deren Mittelachse (nicht dargestellt) entspricht.

In der Figur 3B ist die Klemmschelle 3 manuell vollständig zugeklappt worden, der Spannmechanismus 7 ist jedoch noch nicht wirksam.

In der Figur 3C ist zu erkennen, dass der Spannhebel 8 an seinem der Buchse 5 zugewandten Ende 8a in das zugehörige Widerlager 10 eingesetzt wird. Zum Schließen des Spannmechanismus 7 wird das von der Buchse 5 abgewandte Ende 8b des Spannhebels dann gegen den Grundkörper 2 der Palette 1 gedrückt.

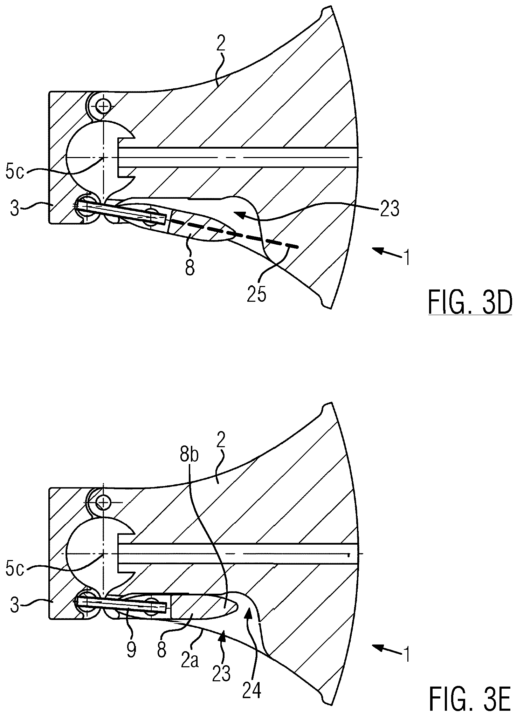

Die Figur 3D zeigt den Spannhebel 8 in einer entsprechend weiter zum Grundkörper 2 hin geschwenkten Stellung, die beispielsweise einem Totpunkt 25 entspricht, bei dessen Überdrücken der Spannhebel 8 selbsttätig weiter in die Vertiefung 23 schwenkt und schließlich am Grundkörper 2 einrastet.

Die Figur 3E zeigt eine entsprechende Schließstellung / Endstellung des Spannhebels 8, in der der Spannhebel 8 am Grundkörper 2 anschlägt und vorzugsweise derart in die Vertiefung 23 eingreift, dass der Spannhebel 8 dabei nicht über die benachbarte seitliche Außenkontur 2a des Grundkörpers 2 übersteht. Dadurch lässt sich verhindern, dass der Spannhebel 8 und/oder die Zugstange 9 im geschlossenen Zustand des Spannmechanismus 7 versehentlich beschädigt werden. Ebenso lässt sich ein unbeabsichtigtes Öffnen des Spannmechanismus 7 verhindern.

Zum werkzeuglosen manuellen Öffnen des Spannmechanismus 7 kann das freie Ende 8b des Spannhebels 8 im Bereich der Griffmulde 24 manuell hintergriffen und in der Folge aus der Vertiefung 23 herausgezogen werden. Nach Überwinden des Totpunkts 25 ist der Spannmechanismus 7 gelöst, und die Klemmschelle 3 kann nach Herausziehen des Spannhebels 8 aus dem Widerlager 10 vollständig aufgeklappt werden.

Es versteht sich, dass die Klemmschelle 3 zum Aufsetzen/ Abnehmen der Palette 1 bezüglich der Welle 6 dann soweit aufgeklappt wird, dass eine seitliche Montage/Demontage der Palette 1 an der eingebauten Welle 6 möglich ist. Hierzu ist lediglich der Bereich des Scharniers 4, also der Übergang des Grundkörpers 2 zur Klemmschelle 3 mit einem ausreichend großen Schwenkbereich auszubilden.

Die Paletten 1 und die Wellen 6 sind als vorzugsweise formschlüssig zueinander passende Bestandteile von Paletteneinheiten 26 zu verstehen, wobei die Wellen 6 vorzugsweise an einer Etikettiermaschine 31 fest eingebaut sind und die Paletten 1 bei eingebauten Wellen 6 ausgetauscht werden können.

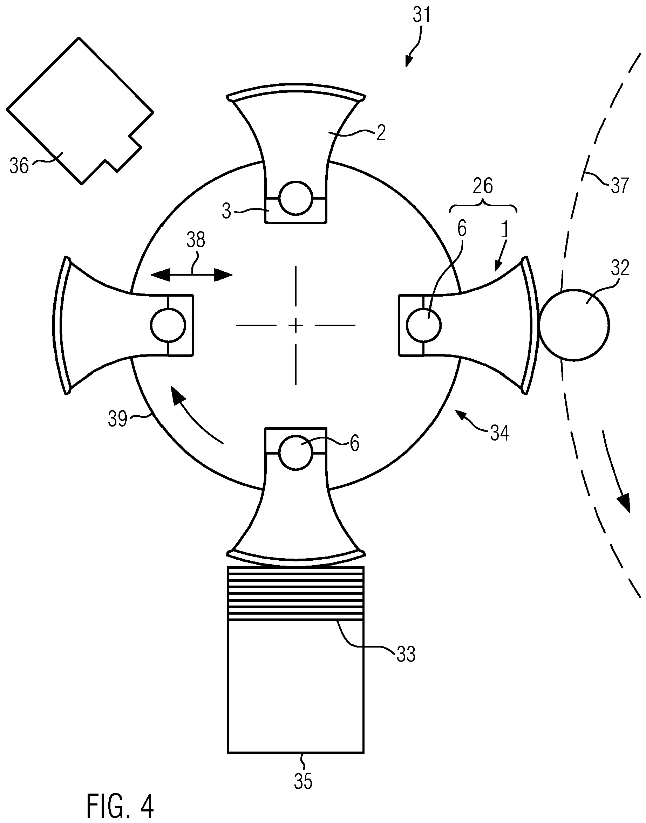

Die Figur 4 zeigt schematisch eine solche Etikettiermaschine 31 zum Etikettieren von Behältern 32 mit Etiketten 33. Die Etikettiermaschine 31 umfasst demnach ein kontinuierlich drehbares Palettenkarussell 34 mit den Paletten 1 und zugehörigen Wellen 6, ein Etikettenmagazin 35 zum Bereitstellen der Etiketten 33, ein Leimwerk 36, das vorzugsweise zum Leimauftrag durch Aufspritzen von Kaltleim auf die an den Paletten 1 umlaufenden Etiketten 33 ausgebildet ist, sowie einen kontinuierlich rotierenden Behältertisch 37, an dem die Behälter 32 auf an sich bekannte Weise umlaufen.

In vorteilhafter Weise können die Paletten 1 an den eingebauten Wellen 6 aus einer seitlichen Richtung 38 montiert und demontiert werden, ohne eine schematisch angedeutete obere Lagerplatte 39 vom Palettenkarussell 34 abzunehmen. Ebenso lässt sich ein gemeinsamer Austausch der Paletten 1 und der zugehörigen Wellen 6 vermeiden.

Somit ist eine besonders einfache Handhabung der Paletten 1 sowie deren korrekte und reproduzierbare Festlegung hinsichtlich der relativen Drehlage und der Höhenlage am Palettenkarussell 34 gegeben, beispielsweise bei der Inbetriebnahme oder Wartung der Etikettiermaschine 31, ebenso bei einem Palettenwechsel oder einer Höheneinstellung der Paletten zur Anpassung an bestimmte Etikettenformate und/oder Behälterformate.

## Patentansprüche

1. Palette (1) für ein Palettenkarussell (34) zum Etikettieren von Behältern (32), wobei die Palette eine Buchse (5) zur Aufnahme einer die Palette tragenden Welle (6) und einen Klemmmechanismus zum Arretieren der Welle in der Buchse umfasst, **dadurch gekennzeichnet, dass** die Buchse wenigstens ein Querschnittssegment (5b) umfasst, das als eine zum Einsetzen der Welle in die Buchse an einem Scharniergelenk (4) aufklappbare Klemmschelle (3) ausgebildet ist, und der Klemmmechanismus einen Spannverschluss (7) für die Klemmschelle umfasst, der die Welle mittels der zugeklappten Klemmschelle gegen einen Grundkörper (2) der Palette drückt.

2. Palette nach Anspruch 1, wobei der Spannverschluss (7) umfasst: einen werkzeuglos zu betätigenden Spannhebel (8), der an der Klemmschelle (3) mittels einer Zugstange (9) oder eines Zugbügels angelenkt ist; und ein am Grundkörper (2) der Palette ausgebildetes oder befestigtes Widerlager (10) für den Spannhebel.

3. Palette nach Anspruch 2, wobei die Klemmwirkung des Klemmmechanismus durch Längsverstellung des Zugbügels / der Zugstange (9) einstellbar ist.

4. Palette nach Anspruch 2 oder 3, wobei im Grundkörper (2) eine Vertiefung (23) zur Aufnahme des Spannhebels (8) derart ausgebildet ist insbesondere derart, dass dieser im geschlossenen Zustand nicht über die Außenkontur (2a) des Grundkörpers (2) übersteht.

5. Palette nach Anspruch 4, wobei die Vertiefung (23) eine Griffmulde (24) zum manuellen Hintergreifen des Spannhebels (8) im geschlossenen Zustand umfasst.

6. Palette nach einem der vorigen Ansprüche, wobei die Buchse (5) einen nach innen vorstehenden und bezüglich des Grundkörpers (2) unbeweglichen Zapfen (13) zum Eingreifen der Palette (1) in eine korrespondierende Vertiefung (14) der Welle (6) umfasst.

7. Palette nach Anspruch 6, wobei im Grundkörper (2) ein Vakuumkanal (15) ausgebildet ist, der einen im Zapfen (13) insbesondere stirnseitig ausgebildeten Vakuumanschluss (16) mit einem am Grundkörper im Wesentlichen entgegengesetzt angeordneten Ansaugbereich (17) für Etiketten (33) verbindendet.

8. Paletteneinheit (26) für ein Palettenkarussell (34), mit der Palette (1) nach wenigstens einem der vorigen Ansprüche und mit einer korrespondierenden Welle (6) zur schwenkbaren Lagerung der Palette am Palettenkarussell.

9. Paletteneinheit nach Anspruch 8, wobei an der Welle (6) wenigstens eine im Wesentlichen radial ausgerichtete Vertiefung (14) für einen korrespondierenden, in der Buchse (5) nach innen vorstehenden Zapfen (13) ausgebildet ist, um die Palette (1) hinsichtlich ihrer relativen Drehlage und Höhenlage an der Welle festzulegen.

10. Paletteneinheit nach Anspruch 9, wobei die Vertiefung (14) mehrfach, in Längsrichtung der Welle (6) verteilt, vorhanden ist, um die Palette (1) in unterschiedlichen Höhenlagen an der Welle / am Palettenkarussell (34) festzulegen.

11. Paletteneinheit nach Anspruch 9 oder 10, wobei die Welle (6) einen längs darin verlaufenden Vakuumkanal (18) sowie einen damit verbundenen, in die Vertiefung (14) mündenden Vakuumanschluss (19) für die Palette (1) umfasst.

12. Palettenkarussell (34) für eine Etikettiermaschine (31) für Behälter (32), mit mehreren Paletteneinheiten (26) nach wenigstens einem der Ansprüche 8 bis 11.

13. Etikettiermaschine (31) zur Etikettierung von Behältern (32), mit dem Palettenkarussell (34) nach Anspruch 12 und mit einem Leimwerk (36) zum Aufspritzen von Kaltleim auf am Palettenkarussell umlaufende Etiketten (33).
